# EUROPEAN PATENT APPLICATION

(11) **EP 1 701 468 A1**
(43) Date of publication of application: **13.09.2006**
(21) Application number: 05026648.5
(22) Date of filing: 06.12.2005
(51) Int. Cl.: H04L 7/04, H04L 25/14, H04J 3/16

(54) **Variable communication capacity data transmission device**

(30) Priority: 09.03.2005 JP 2005064751
(71) Applicant: HITACHI, LTD., Chiyoda-ku Tokyo 100-8280 (JP)
(72) Inventor: Toyoda, Hidehiro, Hitachi Ltd Intell.Prop.Off, Chiyoda-ku Tokyo 100-8220 (JP)
(74) Representative: Strehl Schübel-Hopf & Partner

(57) **Abstract**

Disclosed is a data transmission device of variable communication capacity that can set bands and set line communication capacities according to users' requests, and can automatically determine usable lines. The data transmission device includes: a transmission device having a transmission unit connected to N (N > 1) transmission lines; a reception device having a reception unit connected to N reception lines; and negotiation units connected to both the transmission unit and the reception unit. The transmission unit converts transmission data of parallel bits into a data array with one to N trains that is different in the number of data trains depending on specified transmission capacity. The reception unit synthesizes reception data trains inputted from one to N reception lines determined by specified reception capacity, of the N reception lines. The negotiation unit of the transmission side sends line use/disuse information to the negotiation unit of the reception side so that both the transmission unit and the reception unit select identical lines.

## Description

### FIELD OF THE INVENTION

The present invention relates to a variable communication capacity data transmission device. More particularly, it relates to a variable communication capacity data transmission device that forms one virtual transmission path by plural transmission lines, and changes transmission rates by automatically negotiating the number of transmission lines between a transmission side and a reception side according to a requested band and a connection state of the transmission lines.

### BACKGROUND OF THE INVENTION

Most of long-distance transmission networks adopt serial transmission, and the transmission speed has been increased by raising a transmission clock frequency. However, high-speed serial transmission of 40 Gbps or more has revealed the limits of operation speeds of communication devices and transmission distances, and it has become difficult to achieve higher serial transmission speeds. As a result, a method has been adopted that virtually handles plural serial lines of comparatively low speeds as one transmission path and transmits data in parallel to increase transmission speeds.

A link aggregation method is known as a communication method of line aggregation type that forms one logical high-speed transmission path by plural transmission lines (IEEE Std 802.3-2002 Edition, "Part 3: Carrier sense multiple access with collision detection (CSMA/CD) access method and physical layer specifications", Clause 43 "Link Aggregation", IEEE, 2002.3.8). The link aggregation method allocates data frames to each transmission line on a flow basis. The flow indicates a series of data frames identified by combinations of source addresses of transmission frames, destination addresses, and applications used. No special relationship is required between flows during data transmission (frame transmission). However, a reception side must guarantee the order of data frames within each flow, and the order of frames must not be reversed in a network.

On the other hand, a device of transmission side assigns sequence numbers to transmission frames and allocates the transmission frames to a transmission buffer containing a small amount of data to be transmitted, and transmits the transmission frames to a line associated with the transmission buffer, while a device of a reception side temporarily stores the received frames in a reception buffer, and then reads the transmission frames in the order of sequence numbers. A communication system of line aggregation type is proposed that prevents the reversal of frame order by the above-mentioned arrangement (see JP-A No. 9866/2002).

However, in conventional data transmission devices, as a user-selectable communication interface to increase communication speeds, communication speeds are increased with fixed magnifications. For example, in IEEE802.3-compliant communication interfaces, 10 Mbps, 100 Mbps, 1 Gbps, and 10 Gbps are provided as communication speeds increased in increments of 10 times. In SONET/SDH, 622 Mbps, 2.5 Gbps, 10 Gbps, and 40 Gbps are provided as communication speeds increased in increments of four times.

However, since an increase in general communication traffic quantities slows in communication speed zones beyond 10 Gbps, most of users using a communication interface of 10 Gbps consider higher communication speeds such as 40 Gbps and 100 Gbps to be unnecessary, presumably from changes in demanded traffic quantities. Even if a band becomes insufficient in 10 Gbps, since making a contract to use with high-speed communication interfaces of 40 Gbps and 100 Gbps yields unnecessary communication costs, most users are satisfied with communication interfaces of 20 Gbps class.

In the above-mentioned link aggregation, the number of communication interfaces increases in proportion to desired communication capacities. Therefore, users who consider approximately a triple increase in costs to be proper when communication capacity increases 10 times will find this method expensive. The link aggregation, which handles data frames on a flow basis, requires processor operation for flow detection and allocation of transmission frames to specific lines, impeding speedup. Moreover, since data frames belonging to identical flows are transmitted through identical lines to guarantee the order of transmission frames (transmission packets), there is a problem that the occurrence of unused lines reduces transmission efficiency when the number of flows is smaller than the number of lines.

The method disclosed in JP-A No. 9866/2002 temporarily stores received data frames in a reception device and reads them in the order of sequence numbers. Therefore, even if the data frames are stored in a reception buffer, when a data frame having a next read sequence number specified by an internal counter does not arrive, a read operation must be halted until the data frame arrives. Time for waiting for a target data frame is managed by a timer reset each time a data frame is read from the reception buffer. Accordingly, when a target data frame is lost in the middle of a transmission path, the method described in JP-A No. 9866/2002 completely halts a read operation on received data frames until the timer turns time-out, inevitably causing reduction in transmission efficiency.

Furthermore, in any of the above-mentioned link aggregation and the method of JP-A No. 9866/2002, an administrator must change the setting of lines in a transmission side and a reception side each time the number of lines is changed, and management is very cumbersome.

Therefore a need exists to provide a data transmission device of variable communication capacity that can set bands according to users' requests, automatically determine usable lines, and set line communication capacities.

### SUMMARY OF THE INVENTION

To satisfy the above mentioned need, a variable communication capacity data transmission device of the present invention has a function that the above-mentioned transmission capacity negotiation unit connected to a transmission side of N lines (N is a natural number satisfying N > 1) constituting one virtual transmission path determines the specified transmission capacity and the specified transmission line position, and the above-mentioned reception capacity negotiation unit connected to a reception side of N lines constituting one virtual reception path determines the specified reception capacity and the specified reception line position.

According to the present invention, since an administrator does not need to set both a transmission side and a reception side to change communication capacity, management costs can be reduced.

### BRIEF DESCRIPTION OF THE DRAWINGS

Understanding of the present invention will be facilitated by consideration of the following detailed description of the preferred embodiments of the present invention taken in conjunction with the accompanying drawings, in which like numerals refer to like parts:
FIG. 1 is a drawing showing an example of a communication system of line aggregation to which the present invention is applied;
FIG. 2 is a drawing showing a communication device according to an aspect of the present invention;
FIG. 3 is a drawing showing the transmission unit of FIG. 2;
FIG. 4A - 4D are drawings showing rate conversion in the transmission unit of FIG. 2;
FIG. 5 is a drawing showing the reception unit of FIG. 2;
FIG. 6 is a drawing showing a communication capacity negotiation sequence by a communication device according to an aspect of the present invention;
FIG. 7 is a drawing showing a communication capacity negotiation sequence by a communication device according to an aspect of the present invention;
FIG. 8 is a drawing showing the setting of line selectors in the transmission unit of FIG. 2; and
FIG. 9 is a drawing showing the setting of line selectors in the reception unit of FIG. 2.

### DETAILED DESCRIPTION

It is to be understood that the figures and descriptions of the present invention have been simplified to illustrate elements that are relevant for a clear understanding of the present invention, while eliminating, for the purpose of clarity, many other elements found in data transmission devices and methods of transmitting data. Those of ordinary skill in the art may recognize that other elements and/or steps are desirable and/or required in implementing the present invention. However, because such elements and steps are well known in the art, and because they do not facilitate a better understanding of the present invention, a discussion of such elements and steps is not provided herein. The disclosure herein is directed to all such variations and modifications to such elements and methods known to those skilled in the art.

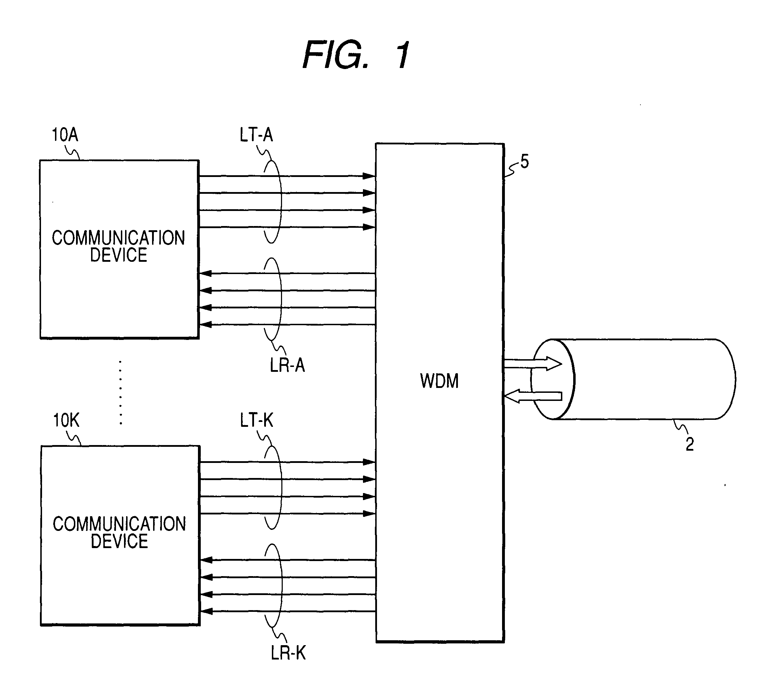

FIG. 1 shows an example of a communication system of line aggregation type to which the present invention is applied.

A communication system includes plural communication devices 10 (10A-10K) and wavelength division multiplexer (WDM) 5. The communication device 10A is connected to the WDM 5 through a transmission line LT-A and a reception line LR-A that each include plural serial lines (optical fibers). Likewise, the communication device 10K is connected to the WDM 5 through a transmission line LT-K and a reception line LR-K that each including plural optical fibers.

The WDM 5, which is connected to an optical fiber 2 serving as part of an optical communication network, wavelength-multiplexes optical signals received from the transmission lines LT-A to LT-K, and transmits them to the optical fiber 2. It also wavelength-demultiplexes wavelength-multiplexed optical signals received from the optical fiber 2 and outputs the resulting signals to the reception lines LR-A to LR-K.

The transmission line LT-A and the reception line LR-A, and the transmission line LT-K and the reception line LR-K may, in connection with the WDM 5, be integrated into one optical fiber through which plural optical signals are wavelength-multiplexed and transmitted. The WDM may be connected with plural optical fibers of the optical communication network.

Connection by plural optical fibers, even if any path of a line used is disconnected and disabled, can prevent communication from being disabled by using only other usable paths though communication capacity is reduced.

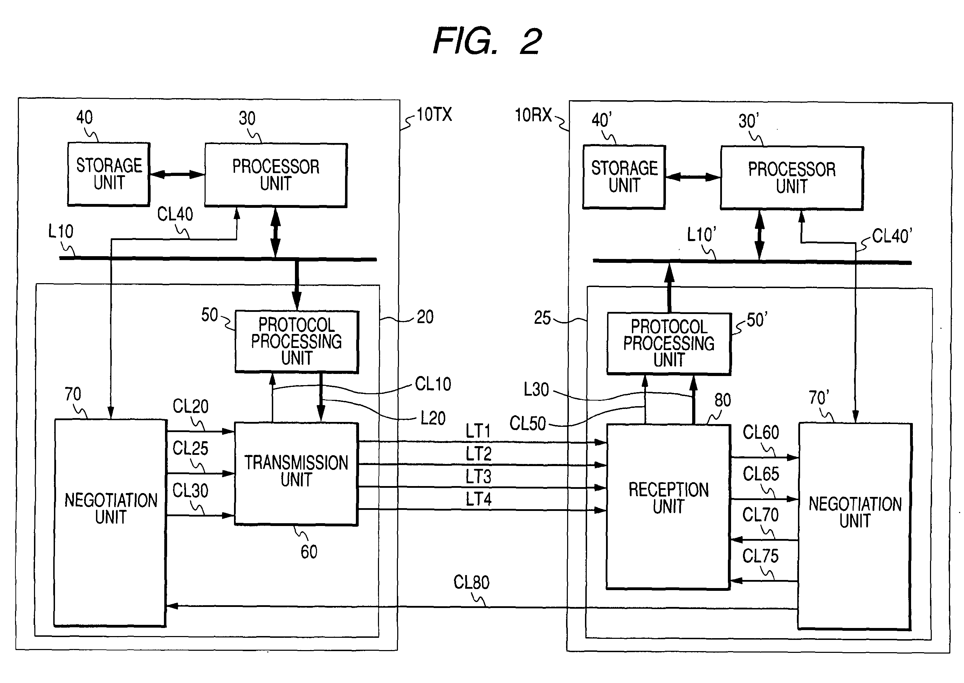

FIG. 2 shows a communication device according to an aspect of the present invention. A communication device 10TX (a transmitting side of the communication device 10 or the WDM 5 of FIG. 1) includes a transmission interface 20, a processor unit 30, and a storage unit 40. Likewise, a communication device 10RX (a receiving side of the communication device 10 or the WDM 5 of FIG. 1), which is connected opposite to the communication device 10TX, includes a reception interface 25, a processor unit 30', and a storage unit 40'.

The transmission interface 20 includes a protocol processing unit 50, a transmission unit 60, and a negotiation unit 70. Likewise, the reception interface 25 includes a protocol processing unit 50', a reception unit 80, and a negotiation unit 70'.

The transmission interface 20 is connected with the processor unit 30 through a bus L10. The transmission unit 60 of the transmission interface 20 is connected with the reception unit 80 of the reception interface 25 through plural serial lines LT1 to LT4.

In the communication device 10TX, the processor unit 30 executes various application programs stored in the storage unit 40, and outputs transmission data for other communication devices (or computers) connected through the communication network to the transmission interface 20.

The protocol processing unit 50 has part or all of protocol processing functions from the application layer to the data link layer which are shown in the OSI (Open System Interconnection) basic model. However, the processor unit 30 may perform part of processing from the application layer to the data link layer. The protocol processing unit 50 receives transmission data from the processor unit, converts transmission data into a transmission data frame, and outputs the transmission data frame to the transmission data bus L20 according to a transmission control signal CL10 outputted by the transmission unit 60.

The transmission unit 60 transmits the transmission data frame outputted by the protocol processing unit 50 to the communication device 10RX through the serial lines LT1 to LT4.

In the communication device 10RX, the reception unit 80 receives the data frame transmitted by the communication device 10TX and outputs the received data frame by using the reception data bus L30 and a reception control signal CL50. The protocol processing unit 50' has part or all of processing functions from the data link layer to the application layer, converts the received data frame into reception data, and outputs the reception data to the processor unit 30' through the data bus L10. The processor unit 30' executes various application programs stored in the storage unit 40', and processes the reception data inputted from the reception interface 25.

The following details a method of negotiating the number and position of lines used of the serial lines LT1 to LT4 between the communication devices 10TX and RX.

The negotiation unit 70 of the communication device 10TX outputs a control signal for outputting a pattern for inspecting a line state through the output control signal line CL30. The transmission unit 60 transmits the inspection pattern to the serial lines LT1 to LT4 according to a control signal inputted from the output control signal line CL30.

The reception unit 80 of the communication device 10RX detects a line state from the inspection pattern received from the serial lines LT1 to LT4, and outputs line state information to the negotiation unit 70' through the signal lines CL60 and CL65. The negotiation unit 70' determines a usable line from the line state information obtained from signal line CL60 and CL65, and outputs usable line information to the communication device 10TX through notification means CL80.

The negotiation unit 70 of the communication device 10TX determines a specified transmission capacity and a specified transmission line position from the usable line information received from the notification means CL80 and a communication capacity request sent through the signal line CL40 by the processor unit 30. Furthermore, it outputs to the transmission unit 60 the specified transmission capacity through the signal line CL20 and the specified transmission line position through the signal line CL25, and at the same time notifies the processor unit 30 of the set specified transmission capacity. The transmission unit 60 transmits the line use information to the communication device 10RX through the serial lines LT1 to LT4 according to the specified transmission capacity and the specified transmission line position.

In the communication device 10RX, the reception unit 80 detects a line state of the serial lines LT1 to LT4, and outputs line state information to the negotiation unit 70' through the signal lines CL60 and CL65. The negotiation unit 70' determines the specified reception capacity and the specified reception line position based on the line state information obtained from the signal lines CL60 and CL65, outputs to the reception unit 80 the specified reception capacity through the signal line CL70 and the specified reception line position through the signal line CL75, and notifies the processor unit 30' of the set specified reception capacity through the signal line CL40'.

By the above-mentioned construction, the setting of the transmission interface and the reception interface can be automatically set according to a line connection state between the transmission interface and the reception interface, and a communication capacity request from the processors (or, administrator).

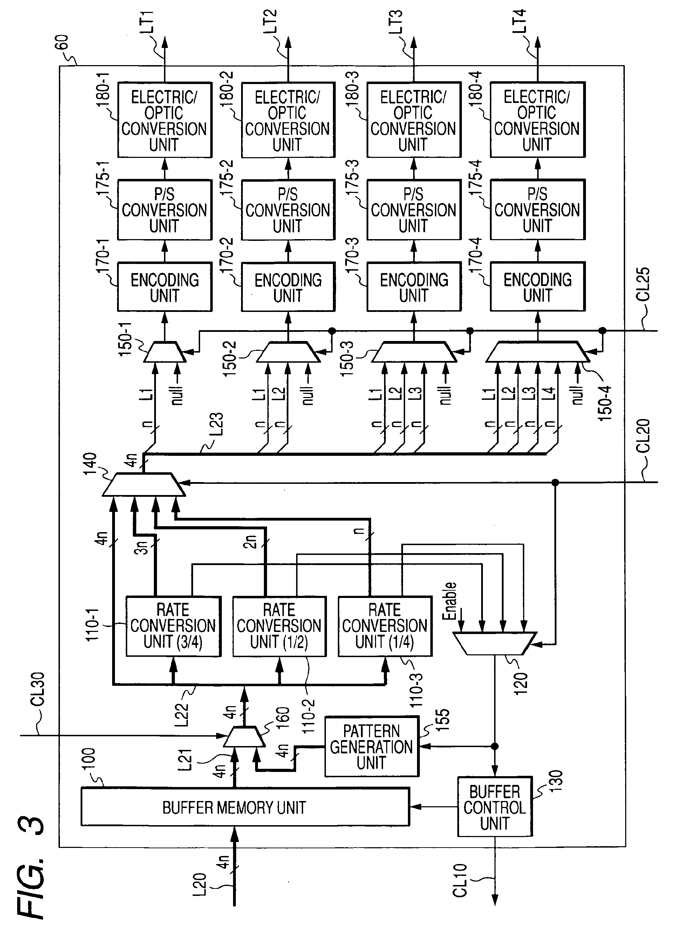

FIG. 3 shows the transmission unit according to an aspect of the present invention. According to the present aspect of the present invention, the transmission unit 60 includes a buffer memory 100 connected to the transmission data bus L20 having a width of 4n bits, a buffer control unit 130 connected to the buffer memory 100, a selector 120 connected to the buffer control unit 130, a pattern generation unit 155, a data selector 160 connected to an output line L21 of the buffer memory 100 and an output line of the pattern generation unit 155, three rate conversion units 110 (110-1 to 110-3) connected to an output line L22 of the data selector 160 and a rate selector 140, four line selectors 150 (150-1 to 150-4) connected to an output line L23 of the rate selector 140, an encoding unit 170-i connected to an output line of the line selector 150-i (i = 1 to 4), a P/S (Parallel/Serial) conversion unit 175-i that converts n-bit data outputted from the encoding unit 170-i into a serial bit signal, and an electric/optic (E/O) conversion unit 180-i that converts an output signal of the P/S conversion unit 175-i into an optical signal. Though an example of four lines is shown in the present description, the number of lines is not limited to four.

The buffer memory 100, the buffer control unit 130, the selector 120, and the rate conversion unit 110 (110-1 to 110-3) form a transmission data array conversion unit, and components from the rate selector 140 to the electric/optic (E/O) conversion units 180-i form a transmission data output unit.

The description below assumes that the protocol processing unit 50 outputs a transmission data frame having a width of 4n bits to the transmission data bus L20. However, the protocol processing unit 50 may output a transmission data frame having a width of m bits (m is a natural number) to the transmission data bus L20 and convert it into data having a width of 4n bits by a converter provided in a pre-stage (or a subsequent stage) of the buffer memory 100. Also, the protocol processing unit 50 may write a transmission data frame having a width of m bits outputted to a transmission data bus L20 to the buffer memory 100 and convert it into data having a width of 4n bits when reading it from the buffer memory 100.

If the width of bits outputted by the protocol processing unit and a bit width of the transmission unit are the same, needless bit width conversion can be avoided. In many cases, they are different. If m is simply an integer multiple of 4n, bit conversion can be easily performed by the latter method. However, if not, like the former, it is necessary to provide a complicated circuit that performs bit conversion and clock conversion.

A data frame having a width of 4n bits outputted to the transmission data bus L20 by the protocol processing unit 50 is temporarily stored in the buffer memory 100 by the buffer control unit 130, and then is read into the output line L21. To prevent buffer overflow when an empty area of the buffer memory 100 falls into shortage, the buffer control unit 130 issues a command for commanding the protocol processing unit 50 to halt the output of the data frame through the control signal line CL10, and when a sufficient empty area comes into existence, commands the protocol processing unit 50 to transmit the data frame.

The pattern generation unit 155 prepares continuous inspection patterns as parallel data having a width of 4n bits so that the reception unit 80 constituting the reception interface 25 can inspect the continuity of received data. The data selector 160 is supplied with parallel data having a width of 4n bits outputted to the output line L21 of the buffer memory 100 and the output line of the pattern generation unit 155. Either of the parallel data is selected according to the data select signal CL30 and outputted to the output line L22.

The rate conversion units 110 (110-1 to 110-3) are supplied with parallel data having a width of 4n bits outputted to the output line L22 from the data selector 160. The first rate conversion unit 110-1 operates as a 3/4 rate converter that converts parallel input data having a width of 4n bits into parallel data having a width of 3n bits and outputs it. Likewise, the second rate conversion unit 110-2 operates as a 1/2 rate converter that converts parallel input data having a width of 4n bits into parallel data having a width of 2n bits and outputs it. The third rate conversion unit 110-3 operates as a 1/4 rate converter that converts parallel input data having a width of 4n bits into parallel data having a width of n bits and outputs it.

The rate selector 140 is supplied with parallel data having a width of 4n bits outputted to the output line L22, and the conversion units 110 (110-1 to 110-3). The rate selector 140 selects which bit line L22 the data has been inputted, and with what bit width the data is to be outputted, according to specified of the specified transmission capacity signal CL20. The parallel data inputted to the rate selector 140 differs in bit width from n to 4n bits, but is outputted in 4n bits. When the parallel data is inputted with a bit width fewer than 4n (e.g., n-bit width), data of a lacking bit width is filled with null data (e.g., the value 0). The parallel data having a width of 4n bits of the output line L23 is separated into four trains of data (output lines L1 to L4) each having a width of n bits.

In the above-mentioned construction, the buffer control unit 130 adjusts a data amount read from the buffer memory 100 according to a specified transmission capacity signal fed from the control signal line CL20. According to an aspect of the present invention, one of data output control signals outputted by the rate conversion units 110-1 to 110-3 is inputted to the buffer control unit 130 by controlling input selection by the selector 120 by the specified transmission capacity signal CL20. However, for first input indicative of full mode time (when the output bus L21 is selected by the rate selector 140) by the selector 120, a signal indicating always read permission is inputted.

For example, when the specified transmission capacity signal CL20 indicates the 3/4 rate, the selector 120 outputs the data output control signal outputted by the first rate conversion unit 110-1 to the buffer control unit 130. At this time, the buffer control unit 130 controls the amount of output data to the output bus L21 by controlling the amount of data to be read from the buffer memory 100.

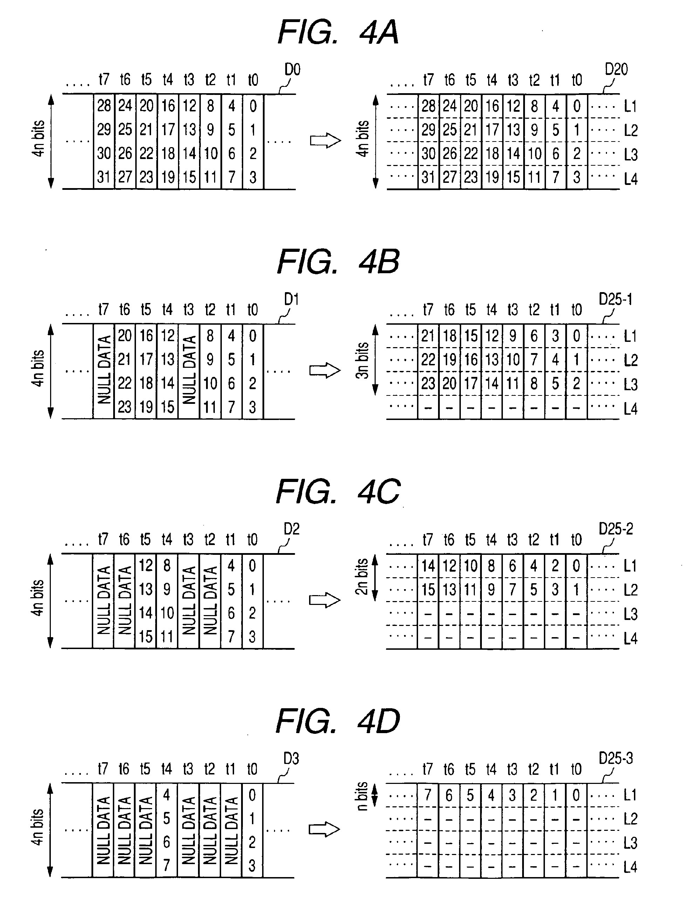

FIGS. 4A to 4D show relationships among a state of the specified transmission capacity signal CL20 according to an aspect of the present invention, data appearing in the output bus L21, and data appearing in the output line L1-L4 of the rate selector 140.

FIG. 4A shows a relationship between a data train D0 appearing in the output bus L21 and an output data train D20 appearing in the output lines L1-L4 when the specified transmission capacity signal CL20 indicates a maximum capacity (full mode). t0 to t7 indicate a power cycle of 4n-bit data, and digits "0" to "31" indicate a data number indicating an n-bit data block (alignment order). In the full mode, a data train D0 having a width of 4n bits is continuously outputted to the output bus L21 without empty cycles occurring. The output data train D0 is separated to four data trains each having a width of n bits, and the data trains each having a width of n bits appear in the output lines L1 to L4 as a data block array indicated by D20.

FIG. 4B shows a relationship between a data train D0 appearing in the output bus L21 and an output data train D20 appearing in the output lines L1-L4 when the specified transmission capacity signal CL20 indicates 3/4 mode. In the 3/4 mode, a data train D1 having a width of 4n bits is outputted to the output bus L21 in a form that contains empty data cycles (t3, t7, ...) at the rate of one to four cycles. Though the output data train D1 is inputted to the rate conversion units 110-1 to 110-3, in the 3/4 mode, the output becomes effective in the first rate conversion unit 110-1. The first rate conversion unit 110-1 converts a data train (data blocks "0" to "11" and "12" to "23") having a width of 4n bits inputted in the period of three consecutive effective data cycles (t0-t2, t4-t6, ...) into a data train having a width of 3n bits, and outputs it in four cycles.

The data train having a width of 3n bits outputted from the first rate conversion unit 110-1 is separated to three data trains each having a width of n bits, which are supplied as a second input of the rate selector 140. In this mode, transmission data appears in the output lines L1-L3 as a data block array shown in D25-1.

FIG. 4C shows a relationship between a data train D0 appearing in the output bus L21 and an output data train D25-2 appearing in the output lines L1 to L4 when the specified transmission capacity signal CL20 indicates 1/2 mode. In the 1/2 mode, a data train D2 having a width of 4n bits is outputted to the output bus L21 in a form that contains empty data cycles (t2, t3, t6, t7, ...) at the rate of two to four cycles. Though the output data train D2 is inputted to the rate conversion units 110-1 to 110-3, in the 1/2 mode, the output becomes effective in the second rate conversion unit 110-2. The second rate conversion unit 110-2 converts a data train (data blocks "0" to "7" and "8" to "15") having a width of 4n bits inputted in the period of two consecutive effective data cycles (t0-t1, t4-t5, ...) into a data train having a width of 2n bits, and outputs it in four cycles.

The data train having a width of 2n bits outputted from the second rate conversion unit 110-2 is separated to two data trains each having a width of n bits, which are supplied as a third input of the rate selector 140. In this mode, transmission data appears in the output lines L1 and L2 as a data block array shown in D25-2.

FIG. 4D shows a relationship between a data train D0 appearing in the output bus L21 and an output data train D25-3 appearing in the output lines L1 to L4 when the specified transmission capacity signal CL20 indicates 1/4 mode. In the 1/4 mode, a data train D3 having a width of 4n bits is outputted to the output bus L21 in a form that contains empty data cycles (t1-t3, t5-t7, ...) at the rate of three to four cycles. Though the output data train D3 is inputted to the rate conversion units 110-1 to 110-3, in the 1/4 mode, the output becomes effective in the third rate conversion unit 110-3. The third rate conversion unit 110-3 converts a data train (data blocks "0" to "3" and "4" to "7") having a width of 4n bits inputted in the period of consecutive effective data cycles (t0, t4, ...) into a data train having a width of n bits, and outputs it in four cycles.

The data train having a width of n bits outputted from the third rate conversion unit 110-3 is supplied as a fourth input of the rate selector 140. In this mode, transmission data appears in the output line L1 as a data block array shown in D25-3.

The pattern generation unit 155 generates data in the same data block array as that of parallel data having a width of 4n bits outputted by the buffer memory 100 and the buffer control unit 130. For example, when the selector 120 selects the 3/4 mode (outputs a data output control signal of the rate conversion unit 110-1), the pattern generation unit 155 generates a continuous inspection pattern in the same block array as that of the data train D0 of FIG. 4B.

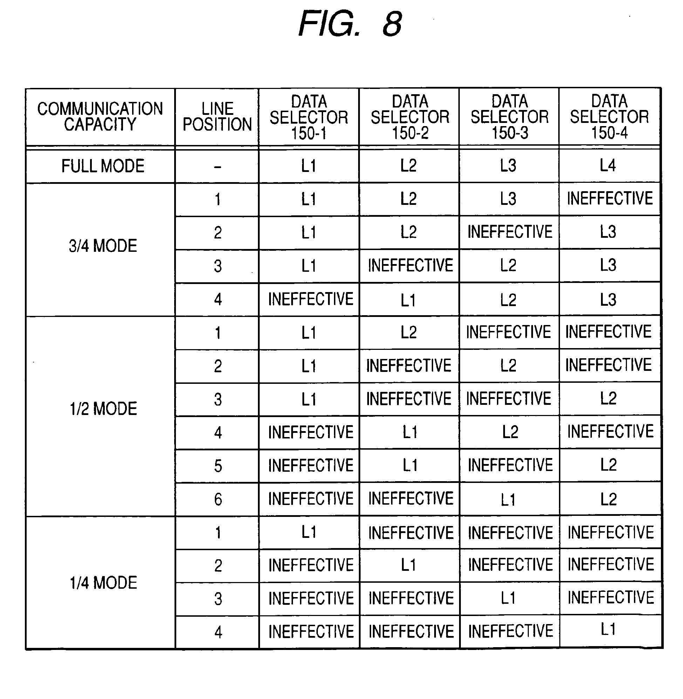

Referring again to FIG. 3, the line selectors 150 (150-1 to 150-4) allocates the output lines LT1 to LT4 to any of the lines based on the specified transmission line position signal CL25. The line selector 150-1 inputs the output line L1 and a null signal. The line selector 150-2 inputs the output lines L1 and L2, and a null signal. The line selector 150-3 inputs the output lines L1 to L3 and a null signal. The line selector 150-4 inputs the output lines L1 to L4 and a null signal. The specified transmission line position signal CL25 feeds selection signals shown in FIG. 8 to each of the line selectors 150. In FIG. 8, when communication capacity is full mode, there is only one combination to allocate L1 to L4 to the data selectors 150-1 to 150-4, respectively. When communication capacity is 3/4 mode, since L1 to L3 are allocated to the four lines, there are four combinations of line allocation. Likewise, there are six combinations for the 1/2 mode and four combinations for the 1/4 mode.

L1 to L4 may be inputted to all line selectors 150 so that the order of L1 to L4 can be interchanged.

The encoding units 170-i (i = 1 to 4) convert output data of an i-th line selector 150-i into transmission code (e.g., 8B10B code, 64B66B code, scramble, etc.) necessary for transfer on a network transmission path. The transmission codes have the function of averaging the probability of occurrences of "0" and "1" in the case of binary transmission, for example, to assure DC balance in transmission paths. The above-mentioned transmission codes can include communication control information besides user data. The P/S conversion units 175-i (i = 1 to 4) convert the output data of the encoding units from parallel data having a width of n bits into serial data having a width of 1 bit. The electric/optic (E/O) conversion units 180-i (i = 1 to 4) convert electrically serial signals outputted from the P/S conversion units 175-i into optical signals and outputs them to the transmission lines LTi (i=1 to 4).

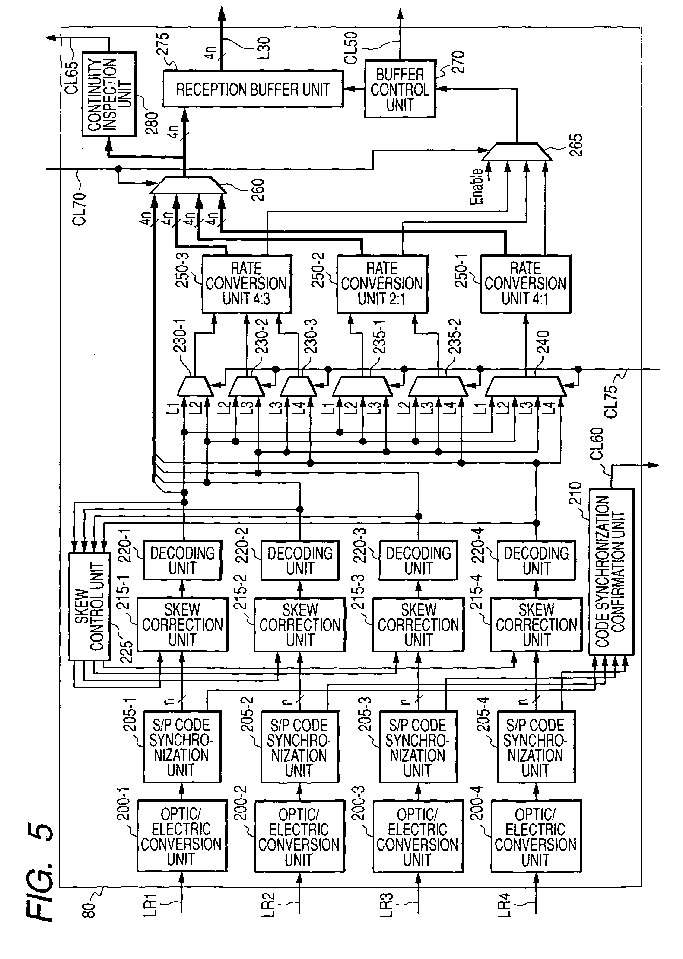

FIG. 5 shows a reception unit of the communication device 10RX according to an aspect of the present invention. The reception unit 80 includes optic/electric (O/E) conversion units 200-i (i = 1 to 4) connected to reception lines LRi (i = 1 to 4), S/P conversion and code synchronization units 205-i (i = 1 to 4) connected to the O/E conversion units 200-i, a code synchronization confirmation unit 210 connected to the S/P conversion and code synchronization units 205-1 to 205-4, skew correction units 215-i (i = 1 to 4) connected to the S/P conversion units 205-i and a skew control unit 225, decoding units 220-i (i = 1 to 4) connected to the skew correction units 215-i, a skew control unit 225 connected to the output of the decoding units 220-1 to 220-4, line selectors 230-1 to 230-3, 235-1, 235-2, and 240 connected to the decoding units 220-i, a rate conversion unit 250-3 connected to line selectors 230-1 to 230-3, a rate conversion unit 250-2 connected to line selectors 235-1 and 235-2, a rate conversion unit 250-1 connected to a line selector 240,, a rate selector 260 connected to the decoding units 220-1 to 220-4 and the rate conversion units 250-1 to 250-3, a selector 265; a reception buffer 275 connected to the rate selector 260, a buffer control unit 270, and a continuity inspection unit 280 connected to the rate selector 260.

Components from the O/E conversion units 200-i to the line selectors 230-1 to 230-3, 235-1, 235-2, and 240 form a reception data input unit. The rate conversion units 250-1 to 250-3 form a reception data array conversion unit. The rate selector 260, the selector 265, the reception buffer 275, and the buffer control unit 270 form a reception data output unit.

The O/E conversion unit 200-i convert optical signals received from the reception lines LRi into electrical signals of serial data form. The S/P conversion and code synchronization units 205-i converts the serial data outputted from the O/E conversion units 200-i into parallel data having a width of n bits, and detects a code separator of transmission code (detects a comma in the case of 8B10B code). The code synchronization confirmation unit 210 confirms a code synchronization state of the S/P conversion and code synchronization units 205-1 to 205-4, and sends synchronization state information through the signal line CL60. The decoding unit 220-i execute conversion reverse to transmission encoding performed by the transmission unit 60 of the communication device 10TX. The skew control unit 225 detects, from the result of encoding by the decoding units 220-1 to 220-4, the difference (skew) between data arrival times that occurred between links of the network during data transmission, and controls the skew correction units 215-1 to 215-4 to cancel out the skew.

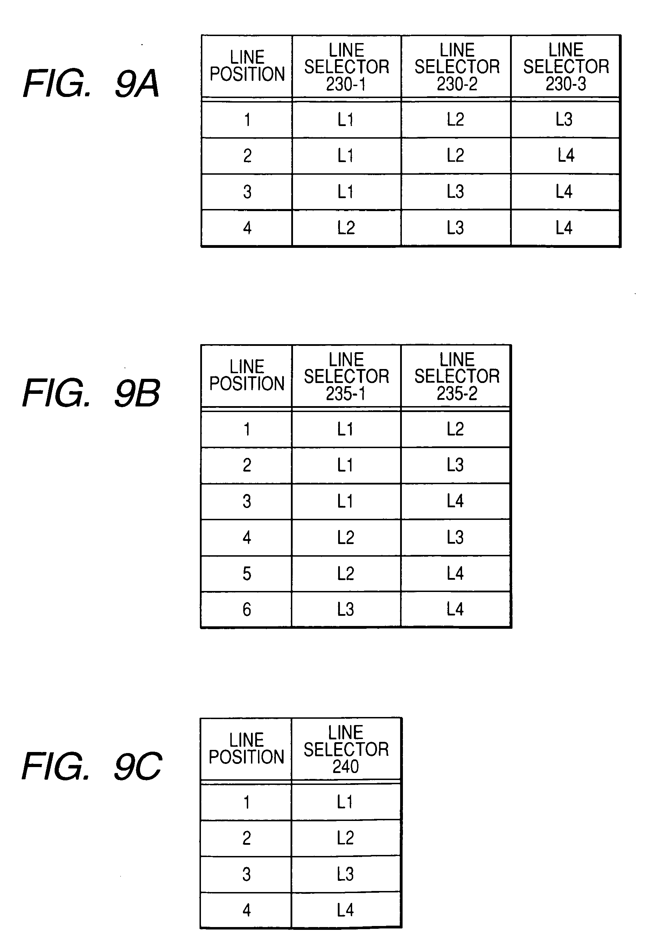

The line selectors 230-1 to 230-3, 235-1, 235-2, and 240 select a signal line inputted from one of input lines TR1 to TR4 based on the specified reception line position signal CL75 according to the control signal line CL70. The control signal line CL70 is inputted from the negotiation part 20' so that the line selectors 230-1 to 230-3, 235-1, 235-2, and 240 select lines shown by FIG. 9. FIG. 9A shows combinations of selections by the line selectors 230-1 to 230-3 in the 3/4 mode. The line selectors 230-1 to 230-3 each selectively output parallel data having a width of n bits of one of the signal lines L1 to L4 according to line positions 1 to 4 indicated by the specified reception line position signal CL75. FIG. 9B shows combinations of selections by the line selectors 235-1 and 235-2 in the 1/2 mode. The line selectors 235-1 to 235-2 each selectively output parallel data having a width of n bits of one of the signal lines L1 to L4 according to line positions 1 to 4 indicated by the specified reception line position signal CL75. FIG. 9C shows a combination of selections by the line selector 240 in the 1/4 mode. The line selector 240 selectively outputs parallel data having a width of n bits of one of the signal lines L1 to L4 according to line positions 1 to 4 indicated by the specified reception line position signal CL75.

The rate conversion parts 250-1 to 250-3 perform rate conversion reverse to the rate conversion performed by the transmission unit 60 of the communication device 10TX. That is, the rate conversion unit 250-1 converts a data train having a width of n bits outputted from the line selector 240 into a data train having a width of 4n bits that contains three null data cycles every four cycles4, and supplies it as a fourth input of the rate selector 260. The rate conversion unit 250-2 converts a data train having a width of 2n bit that includes a data train having a width of n bits outputted from the line selector 235-1 and a data train having a width of n bits outputted from the line selector 235-2 into a data train having a width of 4n bits containing two null data cycles every four cycles, and supplies it as a third input of the rate selector 260. The rate conversion unit 250-3 converts a data train having a width of 3n bits including three data trains each having a width of n bits outputted from the line selectors 230-1 to 230-3 into a data train having a width of 4n bits containing one null data cycle every four cycles, and supplies it as a second input of the rate selector 260. The rate selector 260 is supplied, as a first input, with a data train having a width of 4n bits including four data trains each having a width of n bits outputted from the decoding units 220-1 to 220-4.

The rate selector 260 selects any one from among the above-mentioned first input to fourth input according to a specified reception capacity signal specified by the processor 30' through the control signal line CL70, and outputs it to the reception buffer 275. The buffer control unit 270 controls the writing and reading of data to and from the reception buffer 275. The buffer control unit 270 writes data to the reception buffer 275 in the first half of each cycle and reads data into the reception bus L30 from the reception buffer 275 in the second half.

Since a data train having a width of 4n bits outputted by the conversion units 250-i (i = 1 to 3) contains null data cycles (empty cycles) shown in FIGS. 4B to 4D, the rate conversion units 250-i output control signals indicating effective data cycles so that the buffer control unit 270 writes data to the reception buffer 275 in effective data cycles. The control signals are inputted to the selector 265, and one control signal selected by the selector 265 according to the specified reception capacity signal is supplied to the buffer control unit 270.

Therefore, when the specified reception capacity signal from the control signal line CL70 indicates the 1/4 mode described in FIG. 4, the rate selector 260 selects a data train from the rate conversion unit 250-1 supplied as a fourth input, and the buffer control unit 270, according to a control signal from the rate conversion unit 250-1 selected by the selector 265, writes data having a width of 4n bits in effective data cycles outputted by the rate conversion unit 250-1 to the reception buffer 275. For the same reason, in the 1/2 mode, data having a width of 4n bits in effective data cycles outputted by the rate conversion unit 250-2 is written to the reception buffer 275. In the 3/4 mode, data having a width of 4n bits in effective data cycles outputted by rate conversion unit 250-3 is written to the reception buffer 275. In ineffective data cycles, null data is outputted to the reception bus L30.

When the specified reception capacity signal from the control signal line CL70 indicates the full mode, the rate selector 260 selects the first input and the selector 265 selects an enable signal fed as the first input. Accordingly, in this mode, the writing and reading of effective data to and from the reception buffer 275 are performed in all cycles.

As is apparent from the above-mentioned description, the communication device of the present invention can changeably control the number of lines connected with a communication network. Therefore, when communication data quantity is small, a small number of lines are used, and with an increase in communication data quantity, the number of lines is increased in stages. By doing so, it becomes possible to make a band use contract to meet demands with a communication service provider.

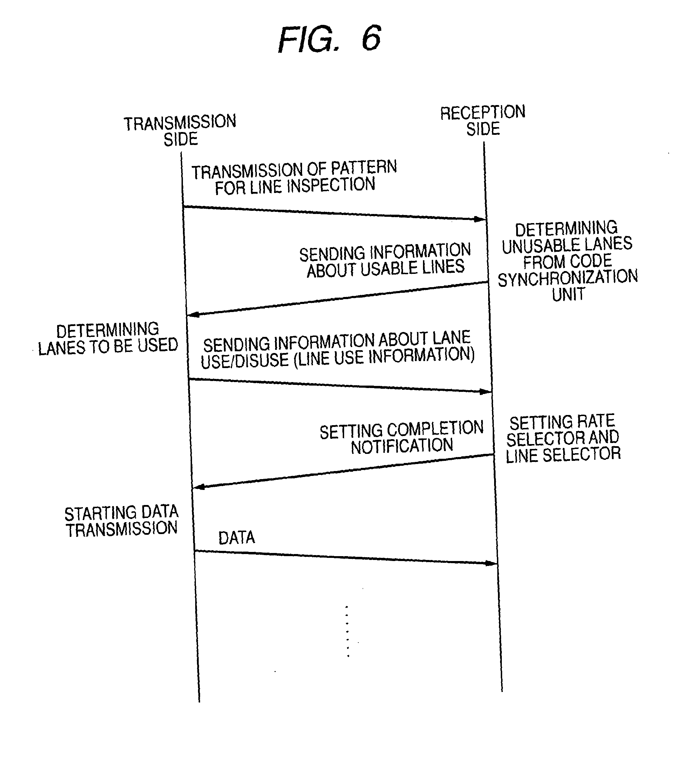

Referring to FIG. 6, a first example of a method of negotiating communication capacity by the communication device according to an aspect of the present invention is shown. The negotiation unit 70 of the communication device 10TX outputs a control signal for outputting a pattern for inspecting a line state through the output control signal line CL30. As a result, since the data selector 160 of the transmission unit 60 selects an inspection pattern outputted by the pattern generation unit 155, the inspection pattern is outputted to the lines LT1 to LT4.

The reception unit 80 of the communication device 10RX detects a line connection state from the inspection pattern received from the serial lines LR1 to LR4 of the reception side, and outputs line synchronization information of a usable line with code synchronization established to the negotiation part 70' through the signal line CL60. The negotiation unit 70' determines a usable line from the line state information obtained from the signal line CL60, and sends usable line information to the communication device 10TX through notification means CL80.

The negotiation unit 70 of the communication device 10TX determines a specified transmission capacity and a specified transmission line position according to the usable line information received from the notification means CL80 and a communication capacity request sent by the processor unit 30 through the signal line CL40. Moreover, the negotiation unit 70 outputs the specified transmission capacity through the signal line CL20 and the specified transmission line position through the signal line CL25 to the transmission unit 60, and at the same time notifies the processor unit 30 of the specified transmission capacity.

The transmission unit 60 determines the lines LT1 to LT4 to be used from the specified transmission capacity and the specified transmission line position, and outputs ineffective signals for the lines not to be used. Accordingly, in the reception unit 80 of the communication device 10RX, the code synchronization confirmation unit 210 detects again a synchronization state of the serial lines LT1 to LT4, and sends line synchronization information to the negotiation unit 70' through the signal line CL60. Thereby, the negotiation unit 70' can determine the specified reception capacity and the specified reception line position.

The transmission unit 60 may, according to the specified transmission capacity and the specified transmission line position, transmit line use information indicating which lines are used (or not used), to the communication device 10RX through the serial lines LT1 to LT4. Thereby, the reception unit 80 can more correctly determine the specified reception capacity and the specified reception line position. Here, a line use information detecting unit that extracts line use information may be provided in a subsequent stage of the decoding units 220-i of the reception unit 80, and the negotiation unit 70' may determine the specified reception capacity and the specified reception line position from the received line use information. The line use information may be transmitted using control characters of transmission code. Use of control characters of transmission code eliminates the need to provide means for sending line use information to the reception unit except the serial lines LT1 to LT4. Moreover, line use information can be sent also when transmission data is being transmitted from the protocol processing unit, and the specified reception capacity and the specified reception line position can be changed even during data communication.

The reception unit 80 sets the line selectors 230-1 to 230-3, 235-1, 235-2, and 240 and the rate selector 260 according to the specified reception capacity and the specified reception line position that are specified in the signal lines CL70 and CL75 specified by the negotiation unit 70'. Then, in the continuity inspection unit 280, the reception unit 80 inspects whether parallel data having a width of 4n bits outputted by the rate selector 260 is the same as a content outputted by the transmission unit 60, and notifies the negotiation unit 70' of the inspection result through the signal line CL65. The negotiation unit 70' notifies the negotiation unit 70 of setting completion if the inspection result inputted from the signal line CL65 is normal. On receipt of notification of setting completion, the transmission interface 20 determines that the setting of the reception interface 25 has been completed, and starts to transmit transmission data from the protocol processing unit.

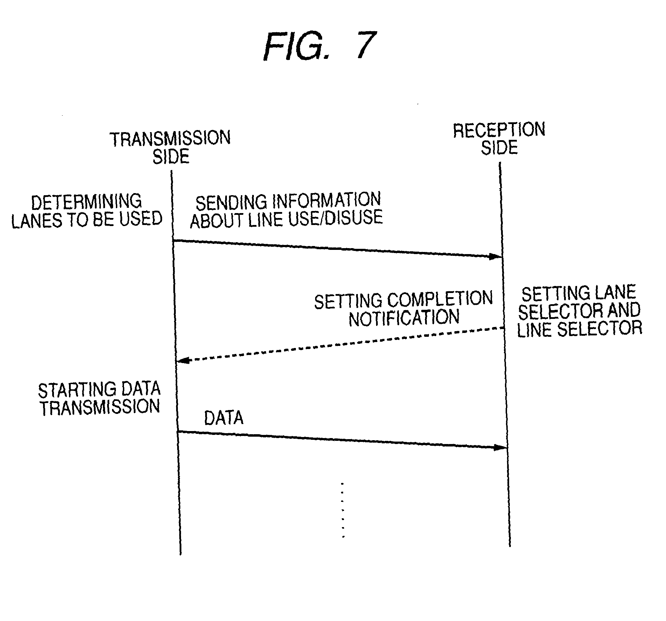

FIG. 7 shows a second example of a method of negotiating communication capacity by the communication device according to an aspect of the present invention. According to an aspect of the invention, the inspection of usable lines and setting completion notification from the reception unit 80 that are performed in as described above are omitted.

The negotiation unit 70 of the communication device 10TX determines a specified transmission capacity and a specified transmission line position according to a communication capacity request sent by the processor unit 30 through the signal line CL40, and outputs the specified transmission capacity through the signal line CL20 and the specified transmission line position through the signal line CL25 to the transmission unit 60, and at the same time notifies the processor unit 30 of the specified transmission capacity.

The transmission unit 60 determines the lines LT1 to LT4 to be used from the specified transmission capacity and the specified transmission line position, and outputs ineffective signals for the lines not to be used. Accordingly, in the reception unit 80 of the communication device 10RX, the code synchronization confirmation unit 210 detects again a synchronization state of the serial lines LT1 to LT4, and sends line synchronization information to the negotiation unit 70' through the signal line CL60. Thereby, the negotiation unit 70' can determine the specified reception capacity and the specified reception line position.

The transmission unit 60 may, according to the specified transmission capacity and the specified transmission line position, transmit line use information indicating which lines are used, to the communication device 10RX through the serial lines LT1 to LT4. Thereby, the reception unit 80 can more correctly determine the specified reception capacity and the specified reception line position. Here, a line use information detecting unit that extracts line use information may be provided in a subsequent stage of the decoding units 220-i of the reception unit 80, and the negotiation unit 70' may determine the specified reception capacity and the specified reception line position from the received line use information. The line use information may be transmitted using control characters of transmission code. Use of control characters of transmission code eliminates the need to provide means for sending line use information to the reception unit except the serial lines LT1 to LT4. Moreover, line use information can be sent also when transmission data is being transmitted from the protocol processing unit, and the specified reception capacity and the specified reception line position can be changed even during data communication.

The reception unit 80 sets the line selectors 230-1 to 230-3, 235-1, 235-2, and 240 and the rate selector 260 according to the specified reception capacity and the specified reception line position that are specified in the signal lines CL70 and CL75 specified by the negotiation unit 70'. Then, in the continuity inspection unit 280, the reception unit 80 inspects whether parallel data having a width of 4n bits outputted by the rate selector 260 is the same as a content outputted by the transmission unit 60, and notifies the negotiation unit 70' of the inspection result through the signal line CL65.

The transmission interface 20 first determines a specified transmission capacity and a specified transmission line position. Then, after a certain fixed time has elapsed, it determines that the setting of the reception interface 25 has been completed, and starts to transmit transmission data from the protocol processing unit.

As is apparent from the present description, the communication device of the present invention enables automatic setting between a transmission interface and a reception interface according to a line connection state between the transmission interface and the reception interface, and a communication capacity request from a processor or administrator.

According to the present invention, since an administrator does not need to set both a transmission side and a reception side to change communication capacity, management costs can be reduced. Since communication capacity can be changed according to user requests, by making a contract with a communication service provider in a band satisfying demands, unnecessary communication costs can be eliminated. Since the variable communication capacity data transmission device of the present invention performs rate conversion and line allocation in the physical layer, the speed of device operation can be increased in comparison with a link aggregation method that allocates data frames to lines on a flow basis by using processors.

The present invention relates to a communication interface, and can be used in all devices having a communication interface, such as network devices, including, but not limited to, routers, switches, transmission terminals, media converters, repeaters, and gateways, for example, personal computers, servers, large-scale computers, disk array systems, and network attached storages.

Those of ordinary skill in the art may recognize that many modifications and variations of the present invention may be implemented without departing from the spirit or scope of the invention. Thus, it is intended that the present invention covers the modifications and variations of this invention provided they come within the scope of the appended claims and their equivalents.

## Claims

1. A variable communication capacity data transmission device comprising:
a transmission unit connected to a transmission side of N lines (N is a natural number satisfying N > 1) constituting one virtual transmission path;
a reception unit connected to a reception side of N lines constituting one virtual reception path;
a communication protocol processing unit that transmit and receive data to and from said transmission unit and said reception unit;
a transmission capacity negotiation unit coupled to said transmission unit; and
a reception capacity negotiation unit coupled to said reception unit,
wherein the transmission unit has a variable rate transmission data processing unit that converts transmission data of parallel bits outputted from the communication protocol processing unit into data trains having a data array with one to N trains that differs in the number of data trains depending on a specified transmission capacity, and with one data train allocated to one transmission line, outputs transmission data having a data array associated with the specified transmission capacity to the one virtual transmission path,
wherein said reception unit has a variable rate reception data processing unit that synthesizes received data trains inputted from one to N reception lines determined by a specified reception capacity, of the N reception lines, into a data train of parallel bits having a transmission rate associated with the specified reception capacity and outputs the data train to the communication protocol processing unit, and a reception line monitoring unit that monitors states of the N reception lines,
wherein said transmission capacity negotiation unit has a function to determine the specified transmission capacity and the specified transmission line position, and
wherein said reception capacity negotiation unit has a function to determine the specified transmission capacity and the specified transmission line position.

2. The variable communication capacity data transmission device according to claim 1,
wherein the variable rate transmission data processing unit comprises:
a transmission data array conversion unit that converts transmission data outputted from the communication protocol processing unit into N types of data arrays of parallel bits that are different in the number of data trains; and
a transmission data output unit that selects specific types of data arrays determined by the specified transmission capacity from among the N types of parallel bit data arrays generated in the transmission data array conversion unit, and outputs transmission data having the specific type of a data array to a transmission path determined by the specified transmission line position, of the transmission paths, and
wherein the variable rate reception data processing unit comprises:
a reception data input unit that selectively inputs data trains inputted in parallel from a reception path determined by the specified reception line position, of the N reception lines;
a reception data array conversion unit that synthesizes the data trains by combinations of different lines for conversion into N types of parallel bit data trains that are different in transmission rate; and
a reception data output unit that selects specific types of parallel bit data trains determined by a specified reception capacity, from among the N types of parallel bit data trains generated in the reception data array conversion unit, and outputs them to the communication protocol processing unit.

3. The variable communication capacity data transmission device according to claim 1, wherein the reception line monitoring unit monitors connection states of the N reception lines, and determines whether each reception line is physically and logically connected with the transmission unit, and sends the result as line connection information.

4. The variable communication capacity data transmission device according to claim 3, wherein the reception capacity negotiation unit sends usable line information to the transmission capacity negotiation unit based on the line connection information sent from the reception line monitoring unit, and a function that determines the specified reception capacity and the specified reception line position and notifies the variable rate reception data processing unit.

5. The variable communication capacity data transmission device according to claim 1, wherein the transmission capacity negotiation unit has a function that determines the specified transmission capacity and notifies the variable rate transmission data processing unit of the specified transmission capacity, and a function that determines the specified transmission line position from the line connection information and the specified transmission capacity sent from the reception capacity negotiation unit, and notifies the variable rate transmission data processing unit.

6. The variable communication capacity data transmission device according to claim 2,
wherein the variable rate transmission data processing unit comprises:
a transmission buffer memory that temporarily stores parallel bit transmission data outputted from the communication protocol processing unit and outputs the stored parallel bit transmission data as data having a width of Nxn bits (n is a natural number of n > 1); and
a transmission buffer control unit that controls writing and reading data to and from the transmission buffer memory, and
wherein the transmission data array conversion unit comprises:
(N - 1) transmission data rate conversion units that each convert a data train having a width of Nxn bits outputted from the buffer memory into data trains having a width of n to (N - 1)×n bits and output the converted data trains as one to (N - 1) trains of data each having a width of n bits; and
a plurality of signal lines through which data having a width of Nxn bit outputted from the transmission buffer memory is outputted as N trains of data each having a width of n bits, and
wherein the transmission data output unit selects a data array having a specific number of trains of data each having a width of n bits determined by a specified transmission capacity indicated by the transmission capacity negotiation unit from one to N trains of data each having a width of n bits outputted from the transmission data array conversion unit, and further outputs the specific number of trains of data each having a width of n bits to a transmission line determined by the specified transmission line position in units of trains of n-bit width.

7. The variable communication capacity data transmission device according to claim 6, wherein the (N - 1) transmission data rate conversion units output control signals for controlling data output from the transmission buffer memory, and wherein the transmission buffer control unit controls data reading from the transmission buffer memory according to a control signal from a specific rate conversion unit selected by the specified transmission capacity.

8. The variable communication capacity data transmission device according to claim 6, wherein the transmission data output unit converts the data having a width of n bits into a serial signal and outputs the converted data on the transmission line.

9. The variable communication capacity data transmission device according to claim 6,
wherein the transmission data output unit for each of the transmission lines comprises:
an encoding unit that encodes the data having a width of n bits;
a parallel-serial conversion unit that converts the output of the encoding unit into a serial signal; and
an electric/optic conversion unit that converts the output signal of the parallel-serial conversion unit into an optical signal and outputs the converted signal on a transmission line.

10. The variable communication capacity data transmission device according to claim 2, wherein the reception data input unit includes plural input selection units that select one to N trains of data each having a width of n bits determined by the specified reception line position, wherein the reception data array conversion unit includes reception data rate conversion units that each synthesize one to N trains of data each having a width of n bits outputted from the input selection units and output them as N types of data trains having a width of Nxn bits that are different in transmission rate, and
wherein the reception data output unit comprises:
a capacity selection unit that selects and outputs a specific type of a data train determined by the specified reception capacity from N types of data trains having a width of Nx n bits outputted from the reception data array conversion unit;
a reception buffer memory that temporarily stores a data train having a width of Nxn bits outputted from the selection unit; and
a reception buffer control unit that controls writing and reading data to and from the reception buffer memory,
wherein a data train of variable rate read from the reception buffer memory by the reception buffer control unit is outputted to the communication protocol processing unit.

11. The variable communication capacity data transmission device according to claim 10, wherein the reception unit comprises N series/parallel conversion units that convert a serial signal inputted from the each reception line into a data train having a width of n bits, and N decoding units that decode output data of the each series/parallel conversion unit and supply the decoded output data to the reception data array conversion unit.

12. The variable communication capacity data transmission device according to claim 10,
wherein the reception unit comprises:
N optic/electric conversion units that convert an optical signal inputted from the each reception line into an electric, serial signal;
N series/parallel conversion units that convert a serial signal outputted from the optic/electric conversion units into a data train having a width of n bits; and
N decoding units that decode output data of the each serial/parallel conversion unit and supply the decoded data to the reception data array conversion unit.

13. The variable communication capacity data transmission device according to claim 1,
wherein the transmission unit comprises:
a pattern generation unit that generates a data pattern determined by a specific equation; and
a selection unit that selectively outputs output of the transmission buffer memory and output of the pattern generation unit.

14. The variable communication capacity data transmission device according to claim 13, wherein the reception unit includes a continuity inspection unit that receives data patterns generated by the pattern generation unit and checks the continuity of patterns.

15. The variable communication capacity data transmission device according to claim 14,
wherein the pattern generation unit generates a data pattern determined by a specific equation,
the transmission unit outputs the data pattern to one to N lines,
the reception unit receives the data pattern,
a reception line monitoring unit of the reception unit monitors connection states of the N lines, and in the transmission unit and the reception unit, locates lines connected physically and logically, and sends usable line information to the reception capacity negotiation unit,
the reception capacity negotiation unit sends the usable line information to the transmission capacity negotiation unit,
the transmission capacity negotiation unit determines the specified transmission capacity and the specified transmission line position from the usable line information, and notifies the transmission data output unit of the specified transmission capacity and the specified transmission line position,
the transmission data output unit selects a data array having a specific number of trains of data each having a width of n bits determined by a specified transmission capacity from one to N trains of data each having a width of n bits outputted from the transmission data array conversion unit, and outputs the specific number of trains of data each having a width of n bits to the line determined by the specified transmission line position in units of trains of n-bit width,
the reception line monitoring unit monitors connection states of the N lines, locates a line through which the transmission unit currently transmits the data pattern, and sends use line information to the reception capacity negotiation unit,
the reception capacity negotiation unit determines the specified reception capacity and the specified reception line position from use line information, notifies the reception data input unit and the reception data output unit of the specified reception capacity and the specified reception line position. and sends setting completion notification indicating that communication capacity setting of the reception unit is completed, to the transmission capacity negotiation unit,
the reception data input unit selects one to N trains of data each having a width of n bits according to the specified reception line position,
the reception data output unit selects a specific type of a data train determined by the specified reception capacity from N types of data trains having a width of Nxn bits outputted from the reception data array conversion unit, and
after the transmission capacity negotiation unit receives the setting completion notification, the transmission unit outputs transmission data of parallel bits outputted from the communication protocol processing unit to a line.

16. A data transmission device comprising:
a transmission unit connected with other data transmission units through a plurality of lines; and
a transmission capacity negotiation unit connected to the transmission unit,
wherein the transmission unit converts data of parallel bits into a data train with the number of trains determined based on a transmission capacity acquired from the transmission negotiation unit, allocates the converted data to a line determined based on a transmission line position acquired from the transmission negotiation unit, of the plurality of lines, and transmits the converted parallel bits to the other data transmission devices.

17. The data transmission device according to claim 16, further comprising:
a reception unit connected with the other data transmission units through a plurality of lines; and
a reception capacity negotiation unit connected to the reception unit,
wherein the reception unit converts data received from a line determined based on a specified reception line position acquired from the reception capacity negotiation unit, of the plural lines, into data of parallel bits of a transmission rate determined based on a specified reception capacity acquired from the reception capacity negotiation unit.

18. The data transmission device according to claim 16, further comprising:
a reception line monitoring unit that monitors connection states of the plural lines connected to the reception unit,
wherein the reception line monitoring unit determines whether each of the plural lines is physically or logically connected with the other data transmission devices, and
wherein the reception capacity negotiation unit determines the specified reception capacity and the specified reception line position based on the determination result of the reception line monitoring unit.
